# EUROPEAN PATENT APPLICATION

(11) **EP 1 531 587 A1**
(43) Date of publication of application: **18.05.2005**
(21) Application number: 04253056.8
(22) Date of filing: 25.05.2004
(51) Int. Cl.: H04L 12/56

(54) **Acknowledgment messages (ACK) prioritization in a communication device**

(30) Priority: 13.11.2003 JP 2003383700
(71) Applicant: FUJITSU LIMITED, Kawasaki-shi, Kanagawa 211-8588 (JP)
(72) Inventor: Shinozaki, Atsushi, c/o Fujitsu Limited, Kawasaki-shi Kanagawa 211-8588 (JP); Yokosaka, Toshiyuki, c/o Fujitsu Limited, Kawasaki-shi Kanagawa 211-8588 (JP); Fujishima, Akira, c/o Fujitsu Limited, Kawasaki-shi Kanagawa 211-8588 (JP)
(74) Representative: Stebbing, Timothy Charles

(57) **Abstract**

A communication device is disclosed that includes a priority provision part. The priority provision part provides priority information to a predetermined control packet to be transmitted from a first layer controlling a data packet retransmission function, and provides the predetermined control packet to a second layer lower than a first layer. The priority information indicates that the predetermined control packet is to be transmitted from the second layer prior to another packet.

## Description

### BACKGROUND OF THE INVENTION

### 1. Field of the Invention

The present invention relates generally to mobile communications technology, and more particularly to a communication device having the function of retransmitting a data packet.

### 2. Description of the Related Art

In this type of technical field, as a result of demands for realization of high-speed data communications supporting mobile media services and realization of international global roaming, the IMT-2000 system has been developed as a next-generation (3rd generation) mobile communications system, and efforts to standardize the IMT-2000 system have been being made by 3GPP (3rd Generation Partnership Project) .

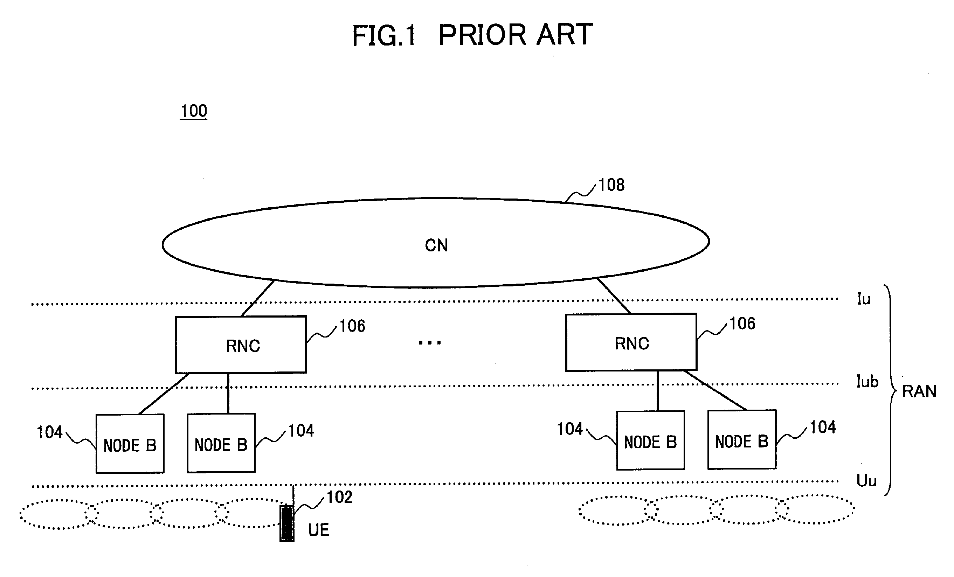

FIG. 1 is a general view of such a mobile communications system 100. Referring to FIG. 1, the mobile communications system 100 includes a user device or a mobile terminal (UE) 102, wireless base stations (Node B) 104 performing radio communications with the mobile terminal 102, radio network controllers (RNCs) 106 controlling the wireless base stations 104, and a core network (CN) 108 performing wired communications with the radio network controllers 106. The core network 108 performs mobility management of the mobile terminal 102, call control, and service control. The radio network controllers 106 and the wireless base stations 104 may also be referred to as a radio access network (RAN). Referring to FIG. 1, an interface Iu is provided between the core network 108 and the radio network controllers 106, an interface Iub is provided between the radio network controllers 106 and the wireless base stations 104, and an interface Uu is provided between the wireless base stations 104 and the mobile terminal 102.

In terms of protocol hierarchy or layers, the mobile communications system 100 has a layered structure of three successive layers that are, from bottom to top, the Physical Layer (Layer 1), the Data Link Layer (Layer 2), and the Network Layer (Layer 3). Layer 2, which is concerned mainly with operations in the radio network controllers 106, is further divided into the Radio Link Control (RLC) layer and the Medium Access Control (MAC) layer below the RLC layer. The RLC layer controls operations such as ARQ (Automatic Repeat reQuest). The ARQ function guarantees the certainty of communications, in the case of failing to obtain an affirmative acknowledgment (ACK) within a certain period of time after transmitting a data packet, by retransmitting the same data packet. This type of mobile communications system is disclosed, for instance, at the URL: <http://www.3gpp.org> (TS25.322 and TS25.321).

In this mobile communications system 100, the communication channel to the mobile terminal 102 includes a radio communication section. Accordingly, time required for packet transmission or time required for obtaining a response to a request (Round Trip Time or RTT) may be elongated. For instance, in the case of transmitting a packet from one of the radio network controllers 106 to the mobile terminal 102, a transmission time interval (TTI) for the packet at the interface Iub, a reception window period that is provided by a corresponding one of the wireless base stations 104 to receive the packet from the radio network controller 106, an interleave cycle in the radio section, and a delay period accompanying other operations are required. As a result, a long period of time may be required for transmission of the packet. Information showing a response to a request for acknowledgment is transmitted as a control packet or a control packet data unit, and is separated from a data packet or a data packet data unit (Data PDU).

If RTT becomes long, an affirmative acknowledgment (ACK) may be received after the necessity of retransmission is determined in ARQ, for instance. In this case, although the contents of the response are affirmative (a packet has been safely received by the other party), the same packet is retransmitted uselessly. Further, if the affirmative acknowledgment has been received early (within the certain period of time), there is no need to retain the transmitted packet thereafter, so that a buffer retaining the packet can be freed early. However, if the acknowledgment arrives belatedly, the freeing of the buffer is delayed so that buffer overflow may occur. Further, if a packet reporting the necessity of resetting arrives belatedly in the case of the occurrence of a protocol error, a long period of time may be used for useless operations.

In order to eliminate this inconvenience, it is desirable to give priority to the transmission of a predetermined control packet including acknowledgment information when the transmission of the control packet contends with the transmission of a data packet. Accordingly, the conventional mobile communications system gives priority to the transmission of a control packet if it contends with the transmission of a data packet in a module (entity) executing a function in the RLC layer.

However, even with such priority control, a control packet may be prevented from being given priority over a data packet as described next.

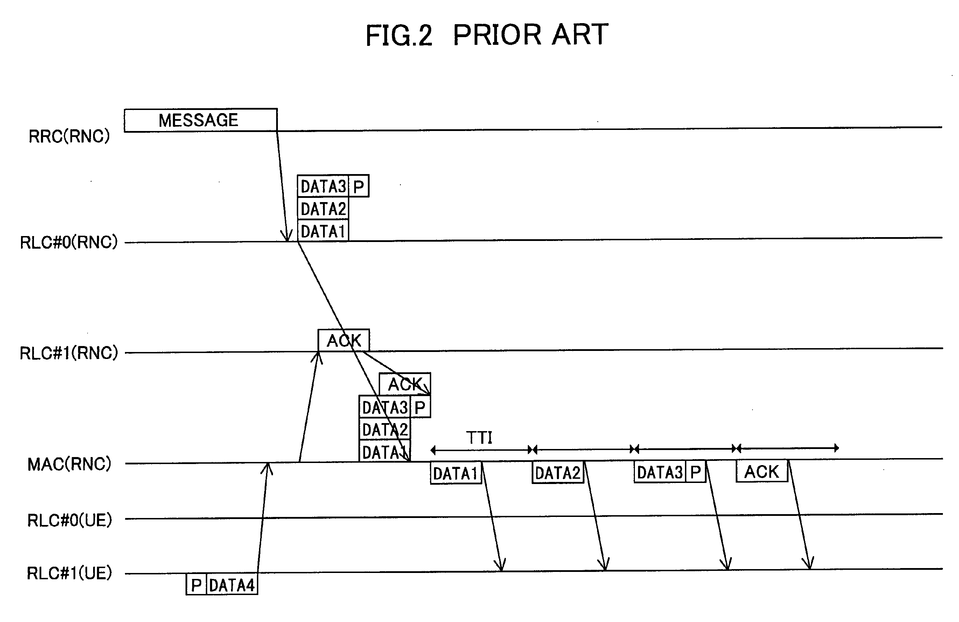

FIG. 2 is a timing chart illustrating how such a problem occurs. FIG. 2 shows the transmission of packets from multiple entities in the RLC layer to the subordinate MAC layer (and further to a wireless base station and a mobile terminal). First, when an entity (RLC#0) in the RLC layer receives message data addressed to a user (UE) from an upper layer (the Radio Resource Control or RRC layer), the entity (RLC#0) segments the message data into data packets 1, 2, and 3 each of appropriate data size. A character "P" affixed to, for instance, the data packet 3 is a polling bit that indicates that the data packet to which it is affixed is the last one. These data packets 1 through 3 are transmitted to the MAC layer to be stored in a buffer.

On the other hand, another entity (RLC#1) in the RLC layer receives a data packet 4 including a request for acknowledgment from the user via the MAC layer. The entity (RLC#1) creates a control packet indicating the contents of a response (for instance, ACK) in response to the acknowledgment request, and transmits the control packet to the MAC layer in order to transmit the control packet to the user. The control packet (ACK) is stored in the buffer of the MAC layer, and is retained, in this case, after the data packets 1, 2, and 3. The buffer is a FIFO (first-in, first-out) type, so that the packets are transmitted to the subordinate wireless base station and mobile terminal in the order the packets have arrived at the MAC layer. In this case, in the MAC layer, the packets stored in the buffer are extracted in the order at predetermined transmission time intervals (TTIs), and are transmitted to the subordinate wireless base station and mobile terminal. In the case of FIG. 2, the control packet, which has been stored last in the buffer, is transmitted last, so that the transmission of the control packet is extremely delayed. That is, the transmission of a predetermined control packet may be given priority over the transmission of other packets in the same entity. However, between two or more entities, such priority is not given to the transmission of a control packet.

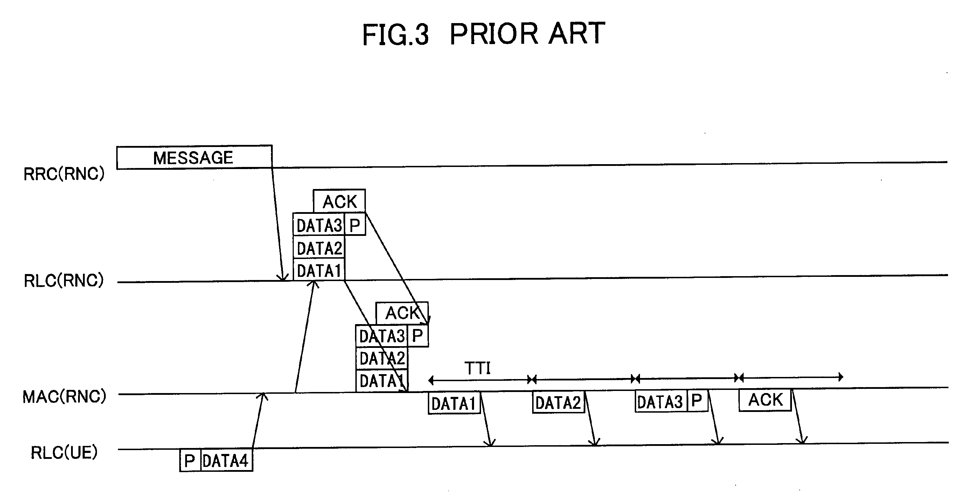

FIG. 3 is a timing chart illustrating another case where an inconvenient problem occurs. FIG. 3 shows the transmission of a packet from an entity in the RLC layer to the subordinate MAC layer. First, when an entity (RLC) in the RLC layer receives message data addressed to a user (UE) from an upper layer (RRC), the entity (RLC) segments the message data into data packets 1, 2, and 3 each of appropriate data size.

On the other hand, the entity (RLC) in the RLC layer receives a data packet 4 including a request for acknowledgment from the user via the MAC layer. The entity (RLC) creates a control packet indicating the contents of a response (for instance, ACK).

In this case, if the control packet (ACK) is created before the transmission of the data packets 1, 2, and 3 to the MAC layer, the control packet is transmitted to the MAC layer prior to the data packets 1 through 3. However, if the control packet (ACK) is created after the transmission of the data packets 1 through 3 to the MAC layer, the control packet is transmitted to the MAC layer after the data packets 1 through 3. Accordingly, in this case, the packets are also transmitted in the order stored in the buffer of the MAC layer, so that the transmission of the control packet is delayed. Thus, in the conventional mobile communications system, there is a problem in that a control packet may not be given priority over a data packet.

### SUMMARY OF THE INVENTION

Accordingly, it is a general object of the present invention to provide a communication device in which the above-described disadvantage is eliminated.

A more specific object of the present invention is to provide a communication device whose function of transmitting a control packet prior to other packets is reinforced, the control packet including information that guarantees transmission, such as (affirmative) acknowledgment (ACK) or negative acknowledgment (NACK).

The above objects of the present invention are achieved by a communication device including a priority provision part configured to provide priority information to a predetermined control packet to be transmitted from a first layer controlling a data packet retransmission function, and provide the predetermined control packet to a second layer lower than a first layer, the priority information indicating that the predetermined control packet is to be transmitted from the second layer prior to a packet other than the predetermined control packet.

The above objects of the present invention are also achieved by a communication device including a first retention part configured to retain a predetermined control packet; and a second retention part configured to retain a packet other than the predetermined control packet, wherein the first and second retention parts are provided separately in a first layer controlling a data packet retransmission function, and the predetermined control packet retained in the first retention part and the packet retained in the second retention part are transmitted separately to a second layer lower than the first layer.

The above objects of the present invention are further achieved by a communication device including a retention unit configured to retain a predetermined control packet and a packet other than the predetermined control packet in a first layer controlling a data packet retransmission function; and a transmission part configured to extract the predetermined control packet and the other packet retained in the retention unit and transmit the extracted packets to a second layer lower than the first layer at a first transmission rate lower than or equal to a second transmission rate for packet transmission from the second layer.

According to the above-described communication devices, the function of a communication device of transmitting a predetermined control packet prior to other packets in order to ensure transmission can be reinforced. As a result, waiting time before receiving a response to a transmitted request (RTT) can be reduced compared with the conventional configurations.

### BRIEF DESCRIPTION OF THE DRAWINGS

Other objects, features and advantages of the present invention will become more apparent from the following detailed description when read in conjunction with the accompanying drawings, in which:
FIG. 1 is a general view of a conventional mobile communications system;
FIG. 2 is a timing chart illustrating an example of packet transmission according to a conventional method;
FIG. 3 is a timing chart illustrating another example of packet transmission according to the conventional method;
FIG. 4 is a functional block diagram showing part of a communication device according to a first embodiment of the present invention;
FIG. 5 is a schematic diagram illustrating packet transmission according to the first embodiment of the present invention;
FIG. 6 is a timing chart illustrating an example of packet transmission according to the first embodiment of the present invention;
FIG. 7 is a timing chart illustrating another example of packet transmission according to the first embodiment of the present invention;
FIG. 8 is a block diagram showing part of a communication device according to a second embodiment of the present invention;
FIG. 9 is a functional block diagram showing part of a network controller according to a third embodiment of the present invention;
FIG. 10 is a schematic diagram showing packet transmission according to the third embodiment of the present invention;
FIG. 11 is a block diagram showing part of a communication device according to the third embodiment of the present invention;
FIG. 12 is a timing chart illustrating an example of packet transmission according to the third embodiment of the present invention; and
FIG. 13 is a timing chart illustrating another example of packet transmission according to the third embodiment of the present invention.

### DETAILED DESCRIPTION OF THE PREFERRED EMBODIMENTS

A description is given below, with reference to the accompanying drawings, of embodiments of the present invention.

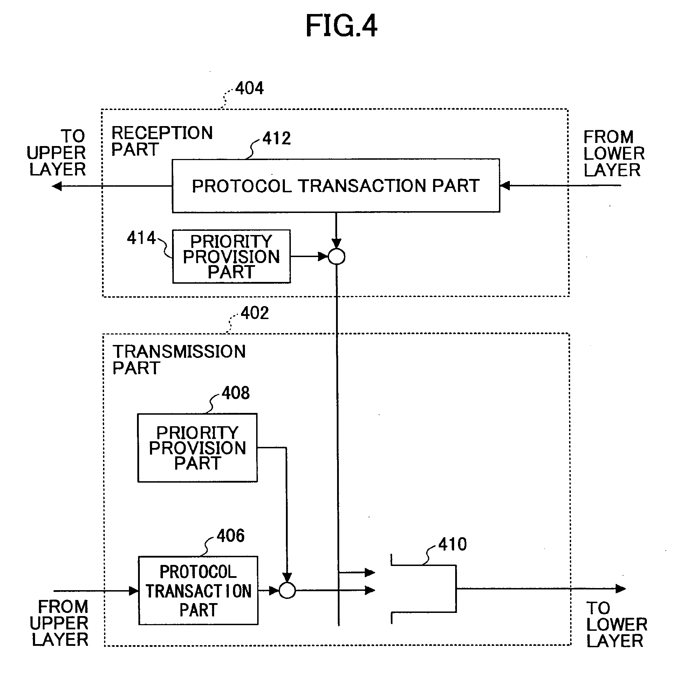

FIG. 4 is a functional block diagram showing part of a communication device according to a first embodiment of the present invention. The communication device operates mainly in the RLC layer. The communication device includes a transmission part 402 and a reception part 404. The transmission part 402 includes a protocol transaction part 406, a priority provision part 408 for giving low priority, and a retention part (or a buffer) 410. The reception part 404 includes a protocol transaction part 412 and a priority provision part 414 for giving high priority. In FIG. 4, the priority provision parts 408 and 414 are graphically represented as separate functional blocks for convenience of description. However, the priority provision parts 408 and 414 may be integrated. Alternatively, the protocol transaction parts 406 and 412 may have the functions of the priority provision parts 408 and 414, respectively.

The protocol transaction part 406 of the transmission part 402 divides a message or information received from an upper layer such as the RRC layer into blocks (segments) of appropriate transmission block size, and adds information such as a header to each block, thereby creating packets to be transmitted from the RLC layer. The priority provision part 408 provides priority information of low priority to the packets created in the protocol transaction part 406. The packets with the priority information are stored in the buffer 410.

On the other hand, the protocol transaction part 412 of the reception part 404 deletes unnecessary information such as a header from a packet received from a lower layer, reconstructs the contents of the original information, and transmits the reconstructed contents of the original information to the upper layer. The protocol transaction part 412 also creates a predetermined control packet showing the contents of a response to an acknowledgment request included in the received packet. The priority provision part 414 provides priority information of high priority to the control packet created in the protocol transaction part 412. The control packet with the priority information is stored in the buffer 410.

Unlike in the conventional system, the RLC layer includes information indicating priority in a packet to be transmitted therefrom, and thereafter, transmits the packet to the MAC layer. The above-described predetermined control packet contains information for guaranteeing the certainty of transmission, and functions as a so-called acknowledge-mode (AM) packet. This type of control packet includes, for instance, reception confirmation information such as ACK or NACK and a request for resetting (a reset request) after a protocol error. These predetermined control packets are given high priority, and the other control packets and data packets are given low priority.

Information indicating such priority may be included in a packet together with an identifier. For instance, the priority information or an identifier may be placed in a payload type indicator field or a cell loss priority field in an ATM (asynchronous transfer mode) cell header in the case of using an ATM cell. Further, the priority information may also be placed in a channel identifier (CID) field in a CPS (common part sublayer) header subsequent to the ATM header. Control packets other than the above-described predetermined control packets, such as transparent-mode (TM) packets and unacknowledge-mode (UM) packets, are given low priority.

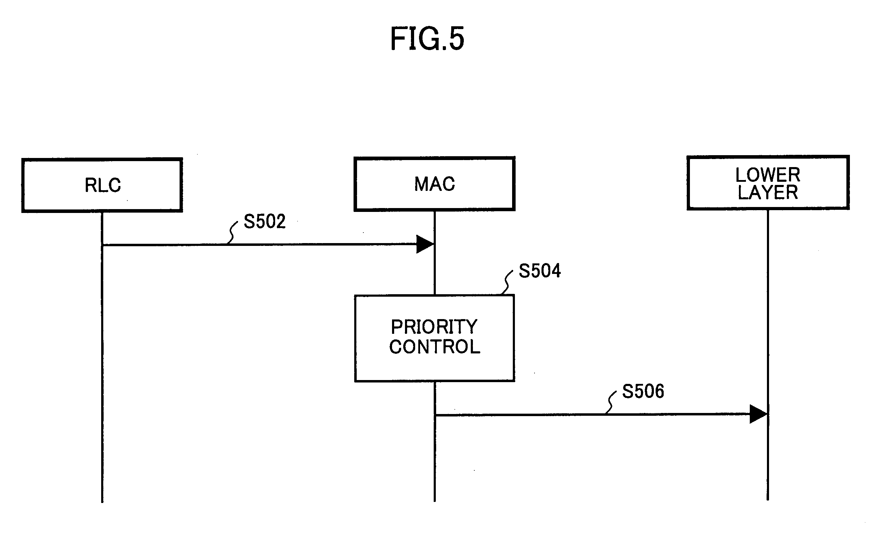

FIG. 5 is a schematic diagram showing an operation in each layer according to the first embodiment of the present invention. In step S502, the RLC layer transmits a packet to the subordinate MAC layer. In this case, the transmitted packet includes information indicating priority so that predetermined control packets are given priority over the other control packets and data packets.

In step S504, receiving the packet from the RLC layer, the MAC layer determines the priority of the packet based on the priority information included in the packet. Then, in step S506, the MAC layer transmits the packet further to a lower layer based on its priority. The MAC layer stores packets in a buffer in the order the packets are received from the RLC layer. At the time of extracting packets from the buffer and transmitting the packets to the lower layer, a packet of high priority is transmitted prior to a packet of low priority. This point makes a great difference from the conventional method in which the priorities of packets stored in a buffer cannot be determined and the packets are simply extracted from the buffer according to the FIFO format.

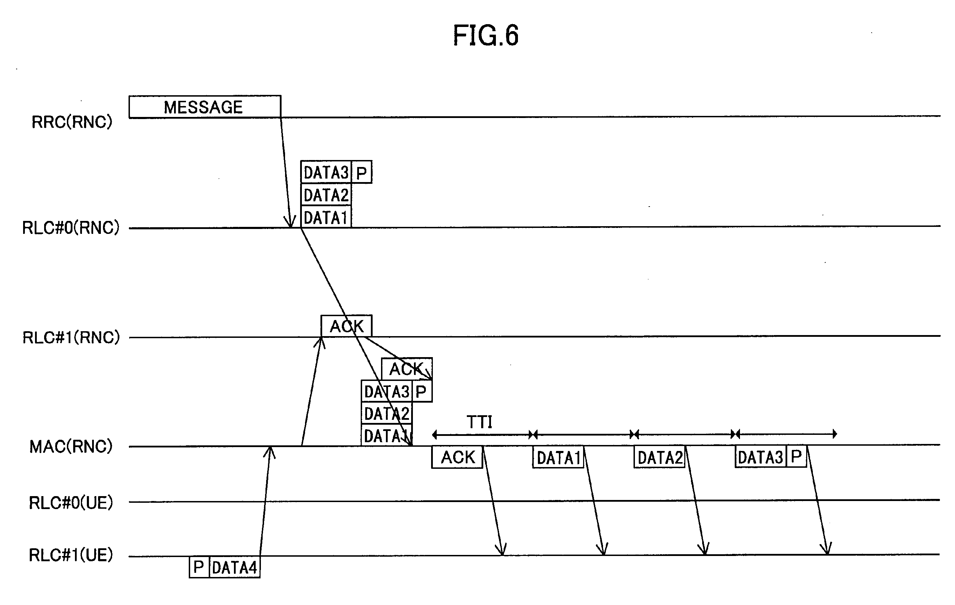

FIG. 6 is a timing chart illustrating an example of packet transmission according to the first embodiment of the present invention. FIG. 6 shows the transmission of packets from multiple entities in the RLC layer to the subordinate MAC layer (and further to a user). First, when an entity (RLC#0) in the RLC layer receives message data addressed to a user (UE) from an upper layer (RRC), the entity (RLC#0) segments the message data into data packets 1, 2, and 3 each of appropriate data size. A character "P" affixed to, for instance, the data packet 3 is a polling bit that indicates that the data packet to which it is affixed is the last one. These data packets 1 through 3 are transmitted to the MAC layer to be stored in the buffer.

On the other hand, another entity (RLC#1) in the RLC layer receives a data packet 4 including a request for acknowledgment from the user via the MAC layer. The entity (RLC#1) creates a control packet indicating the contents of a response (for instance, ACK) in response to the acknowledgment request, and transmits the control packet to the MAC layer in order to transmit the control packet to the user.

The data packets 1 through 3 transmitted from the entity (RLC#0) in the RLC layer include priority information indicating low priority. The control packet transmitted from the other entity (RLC#1) includes priority information indicating high priority. The priority information may be included in an ATM cell header.

The packets transmitted from the entities (RLC#0 and RLC#1) in the RLC layer are stored in the buffer of the MAC layer. In this case, the control packet (ACK) is retained after the data packets 1 through 3. The MAC layer determines the priority of each packet based on the priority information included therein, and transmits a packet of high priority to the user prior to the other packets. In this case, the control packet (ACK) has a higher priority than the data packets 1 through 3. Accordingly, the control packet (ACK) is transmitted first, and successively thereafter, the data packets 1 through 3 are transmitted at predetermined transmission time intervals (TTIs). Since packet priority can be thus determined in the MAC layer, early transmission of the control packet (ACK) is possible.

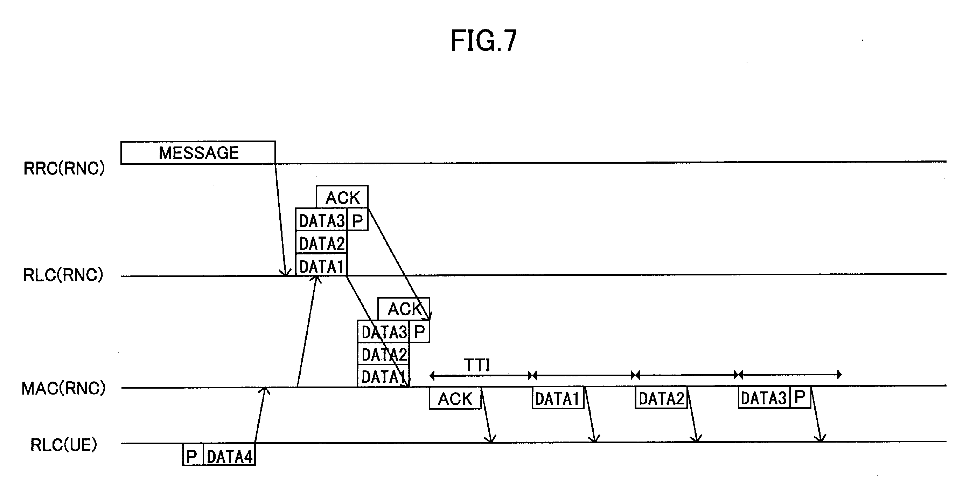

FIG. 7 is a timing chart illustrating another example of packet transmission according to the first embodiment of the present invention. FIG. 7 shows the transmission of a packet from an entity in the RLC layer to the subordinate MAC layer (and further to a user). First, when an entity (RLC) in the RLC layer receives message data addressed to a user (UE) from an upper layer (RRC), the entity (RLC) segments the message data into data packets 1, 2, and 3 each of appropriate data size. On the other hand, the entity (RLC) in the RLC layer receives a data packet 4 including a request for acknowledgment from the user via the MAC layer. The entity (RLC) creates a control packet indicating the contents of a response (for instance, ACK).

In this case, the control packet (ACK) is also provided with priority information indicating high priority and the data packets 1 through 3 are also provided with priority information indicating low priority, and the packets are transmitted to the MAC layer. The MAC layer determines the priority of each packet based on its priority information, and transmits the packets to the user at predetermined transmission time intervals (TTIs) based on their priorities. The packets received in the MAC layer include priority information. Accordingly, even when the MAC layer receives the control packet (ACK) after receiving the data packets 1 through 3, the control packet (ACK) may be given priority for transmission.

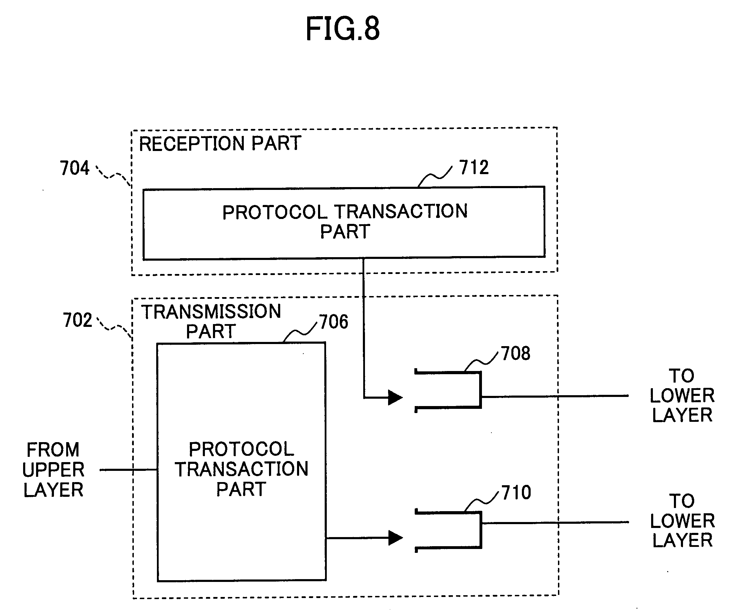

FIG. 8 is a block diagram showing part of a communication device according to a second embodiment of the present invention. The communication device operates mainly in the RLC layer. The communication device includes a transmission part 702 and a reception part 704. The transmission part 702 includes a protocol transaction part 706, a high priority buffer 708, and a low priority buffer 710. The reception part 704 includes a protocol transaction part 712.

The protocol transaction part 706 of the transmission part 702 divides a message or information received from an upper layer such as the RRC layer into blocks (segments) of appropriate transmission block size, and adds information such as a header to each block, thereby creating packets to be transmitted from the RLC layer. The packets created in the protocol transaction part 706 are retained in the low priority buffer 710. The packets retained in the low priority buffer 710 are extracted in the order stored therein, and are transmitted to a lower layer such as the MAC layer.

On the other hand, the protocol transaction part 712 of the reception part 704 deletes unnecessary information such as a header from a packet received from the lower layer, and reconstructs the contents of the original information. The protocol transaction part 712 also creates a control packet showing information such as ACK in response to an acknowledgment request included in the received packet. The control packet is provided to the high priority buffer 708 of the transmission part 702, and is transmitted to the lower layer.

As shown in FIG. 8, the packets are transmitted from the low priority buffer 710 and the high priority buffer 708 to the lower layer through separate transmission lines (physically or logically separated information transmission paths). The MAC layer can determine packet priority based on the difference between the packet transmission lines. As a result, the MAC layer can transmit the control packet to the user prior to the data packets. It is advantageous to provide transmission lines corresponding to priority types as described above because this makes it possible to determine the priority of a packet in the MAC layer even if the packet transmitted to the MAC layer does not have priority information.

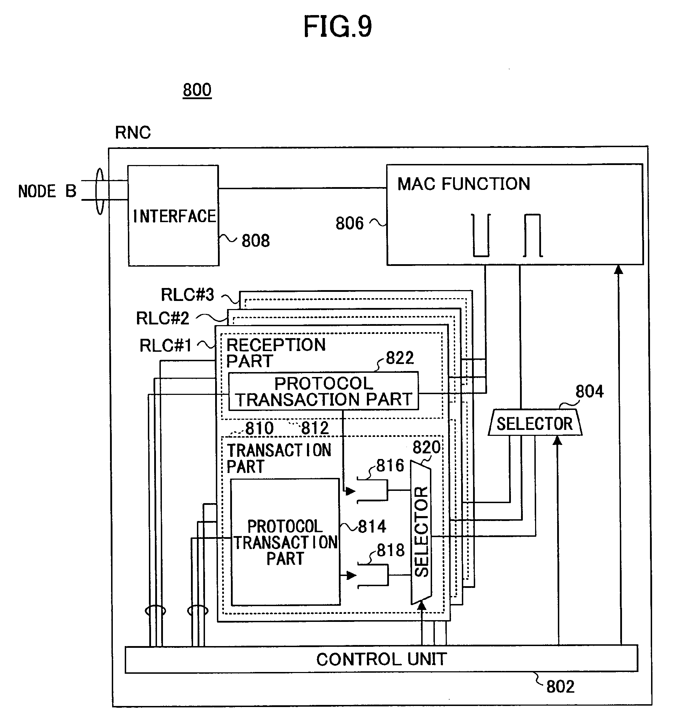

FIG. 9 is a functional block diagram showing part of a radio network controller (RNC) 800 according to a third embodiment of the present invention. The radio network controller 800 includes a control unit 802 controlling the elements of the controller 800, functional modules (that is, entities) RLC#1, RLC#2, and RLC#3 realizing functions related to various protocols, a selector 804, an MAC function part 806, and an interface part 808.

Each of the entities RLC#1, RLC#2, and RLC#3, which has functional elements performing signal processing in the RLC layer, includes a transmission part 810 and a reception part 812. The transmission part 810 includes a protocol transaction part 814, a high priority buffer 816, a low priority buffer 818, and a selector 820. The reception part 812 includes a protocol transaction part 822.

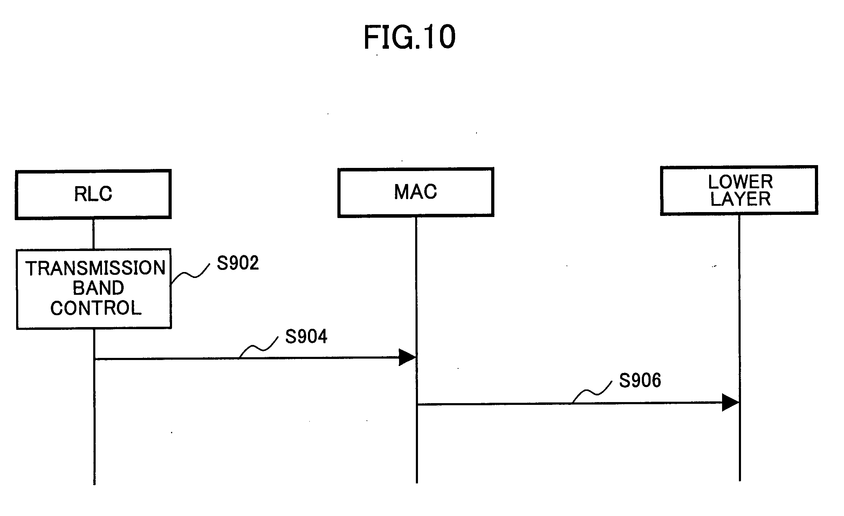

FIG. 10 is a diagram showing an operation in each layer according to this embodiment. A description is given below, with reference to FIGS. 9 and 10, of operations according to this embodiment. First, in step S902, packets to be transmitted to the subordinate MAC layer are created in the RLC layer. As in the functional element shown in FIG. 8, a message addressed to a user received from an upper layer such as the RRC layer is provided to the control unit 802 and the protocol transaction part 814 of a related entity (for instance, RLC#1). The protocol transaction part 814 divides the message into blocks each of appropriate block size, and adds information such as a header to each block, thereby creating the packets to be transmitted from the RLC layer. According to this embodiment, priority information indicating packet priority is included in each packet, and in this case, information indicating low priority is included in each packet. The function relating to priority provision as described with reference to FIG. 4 is performed in the protocol transaction parts 822 and 814. The priority information may be incorporated into, for instance, a header. The created packets are retained in the low priority buffer 818.

On the other hand, the protocol transaction part 822 of the reception part 812 deletes unnecessary information such as a header from a packet received through the interface part 808 and the MAC function part 806, and reconstructs the contents of the original information. The protocol transaction part 822 also creates a control packet showing information such as ACK in response to an acknowledgment request included in the received packet. At this point, priority information indicating packet priority is included in the control packet. In this case, information indicating high priority is included in the control packet. The control packet is provided to the high priority buffer 816 of the transmission part 810. That is, as in the functional element shown in FIG. 8, the packets to be transmitted to the lower layer are stored separately in the high priority buffer 816 and the low priority buffer 818 in accordance with their priorities.

According to this embodiment, the selector 820 is connected to the high and low priority buffers 816 and 818 in each of the entities RLC#1, RLC#2, and RLC#3. Further, the output of the selector 820 of each of the entities RLC#1, RLC#2, and RLC#3 is connected to the selector 804, whose output is provided to a common buffer for transmission (not graphically represented) inside the MAC function part 806.

Referring back to FIG. 10, in step S904, the packets retained in the high priority buffer 816 and the low priority buffer 818 are output from the selector 820. At this point, the packet stored in the high priority buffer 816 is given priority. Timing of selection and output in the selector 820 is controlled based on a reception cycle parameter provided from the control unit 802. The packets output from the selectors 820 of the entities RLC#1, RLC#2, and RLC#3 are provided further to the selector 804. The selector 804 selects and outputs a packet in accordance with a transmission rate or a transmission timing interval (TTI) for packet transmission from the MAC layer to a wireless base station (Node B). The packets received by the selector 804 have priority information. Therefore, a packet of high priority is given priority for transmission based on the priority information.

Then, in step S906, the packet received by the MAC function part 806 is transmitted to a wireless base station of a lower layer through the interface part 808.

According to this embodiment, a packet from an entity in the RLC layer is transmitted from the RLC layer to the subordinate MAC layer not at a random transmission rate but in accordance with the transmission rate (or TTI) of the MAC layer. This prevents the occurrence of a situation where transmission timing of a control packet is delayed by a large number of packets remaining in the common buffer for transmission in the MAC function part (MAC layer). As a result, it is possible to transmit a packet reaching the MAC layer immediately to the lower layer.

According to this embodiment, the selector 820 is provided in each of the entities RLC#1, RLC#2, and RLC#3. Alternatively, a low priority buffer and a high priority buffer both common to the entities RLC#1, RLC#2, and RLC#3 may be provided so that the outputs of the buffers are connected to the selector 804.

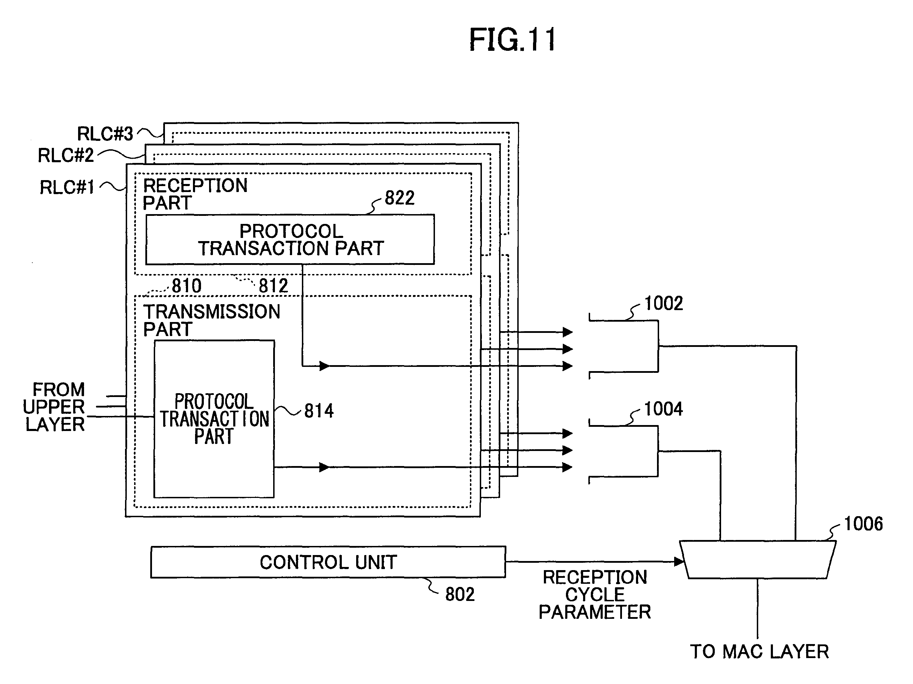

FIG. 11 is a functional block diagram showing part of a functional element having such a configuration. In FIG. 11, the same elements as those of FIG. 9 are referred to by the same numerals. A packet from the protocol transaction part 822 of the reception part 812 is provided to a common high priority buffer 1002. A packet from the protocol transaction part 814 of the transmission part 810 is provided to a common low priority buffer 1004. The outputs of the common high priority buffer 1002 and the common low priority buffer 1004 are provided to a selector 1006, whose output is provided to the MAC function 806 of FIG. 9. The selector 1006 performs selection and output operations based on the reception cycle parameter from the control unit 802.

As another variation, a packet in the low priority buffer 1004 may be output in accordance with the transmission rate of the MAC layer while a packet may be output from the high priority buffer 1002 as soon as the packet is stored therein. Then, by performing an interrupt operation in the selector 1006, the packet of high priority may be transmitted to the MAC layer. In this case, temporarily, the packet is transmitted to the MAC layer at a transmission rate higher than the transmission rate of the MAC layer. Accordingly, the control packet of high priority and the packet of low priority are stored in the buffer of the MAC function part 806 until the next transmission timing according to the transmission cycle (or TTI) of the MAC layer. In this case, if the packets retained in the buffer have priority information as in the above-described case, the packets are transmitted according to their priorities. On the other hand, if the packets do not have priority information, the high-priority control packet may be transmitted from the MAC function part 806 after the transmission of the low-priority packet. However, since the number of packets remaining in the buffer of the MAC function part 806 is extremely small, the waiting time of the high-priority control packet is short. The reason for this is as follows. While most of the packets transmitted in a mobile communications system are low-priority packets, the low-priority packets are transmitted from the RLC layer to the MAC layer at the transmission rate TTI, and it is improbable that the packets from the RLC layer will be retained for a long period of time in the buffer of the MAC function part 806. That is, by transmitting packets from the RLC layer to the MAC layer in accordance with the transmission rate of the MAC layer, it is possible to prevent a significant delay in timing of transmitting a control packet even if packet priority cannot be determined in the MAC layer.

According to this embodiment, the rate of packet transmission from the RLC layer to the MAC layer is determined so as to be equal to the rate of transmission from the MAC layer to its subordinate layer. However, in terms of reduction in transmission waiting time in the MAC layer, the above-described rates of transmission may not be equal. The rate of transmission from the RLC layer may be lower than or equal to the rate of transmission from the MAC layer.

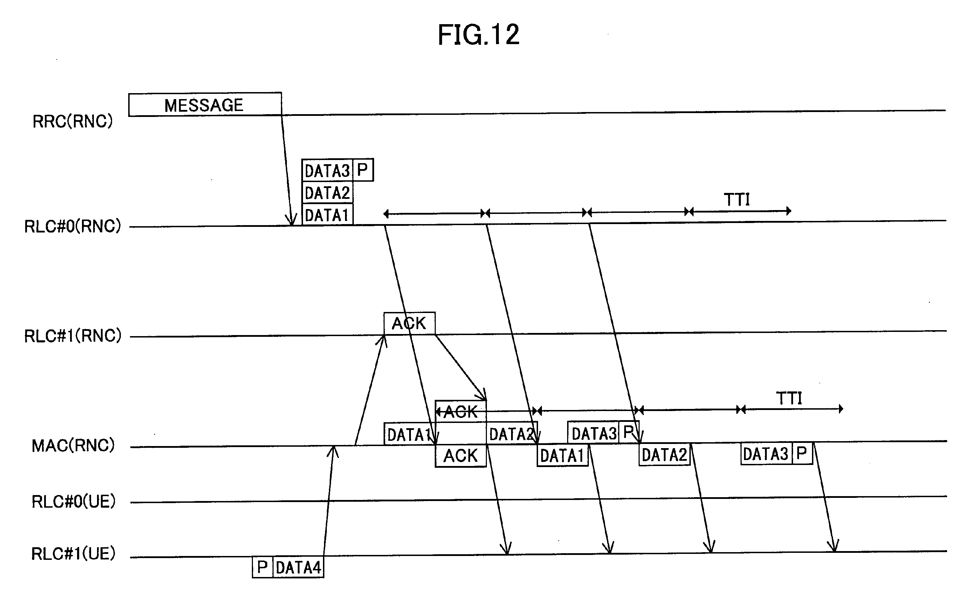

FIG. 12 is a timing chart illustrating an example of packet transmission in the above-described case where a packet is transmitted from an upper layer in accordance with the transmission rate of a lower layer according to this embodiment. FIG. 12 shows the transmission of packets from multiple entities in the RLC layer to the subordinate MAC layer (and further to a user). First, when an entity (RLC#0) in the RLC layer of a radio network controller (RNC)receives message data addressed to a user (UE) from an upper layer (RRC), the entity (RLC#0) segments the message data into data packets 1, 2, and 3 each of appropriate data size. These data packets 1 through 3 are transmitted to the MAC layer not at a time but in accordance with the transmission rate TTI of the MAC layer.

On the other hand, the user transmits a data packet 4 including a request for acknowledgment to the MAC layer through another entity (RLC#1) in the RLC layer (of the UE), and the data packet 4 reaches an entity (RLC#1) in the RLC layer of the RNC. The entity (RLC#1) creates a control packet indicating the contents of a response (for instance, ACK) in response to the acknowledgment request, and transmits the control packet to the MAC layer in order to transmit the control packet to the user.

In this case, the data packets 1 through 3 transmitted from the entity (RLC#0) in the RLC layer of the RNC include priority information indicating low priority. The control packet transmitted from the other entity (RLC#1) includes priority information indicating high priority.

The packets transmitted from the RLC layer are stored in the buffer of the MAC layer. In this case, the control packet (ACK) is retained after the data packet 1. In the MAC layer, the priority of each packet is determined based on its priority information, so that the high-priority control packet (ACK) is transmitted to the user prior to the data packet 1. Successively thereafter, the data packets 1 through 3 are transmitted at predetermined transmission time intervals (TTIs).

If the packets received in the MAC layer do not have priority information, packet priority cannot be determined in the MAC layer. In this case, the data packet 1 has been stored in the buffer earlier than the control packet (ACK). Accordingly, the data packet 1, the control packet (ACK), the data packet 2, and the data packet 3 are transmitted in the order described from the MAC layer at the transmission rate TTI of the MAC layer. Even in such a case, the control packet (ACK) can be transmitted earlier than in the case of FIG. 2 according to the conventional method where the transmission of the control packet has to be delayed until after the transmission of the data packet 3.

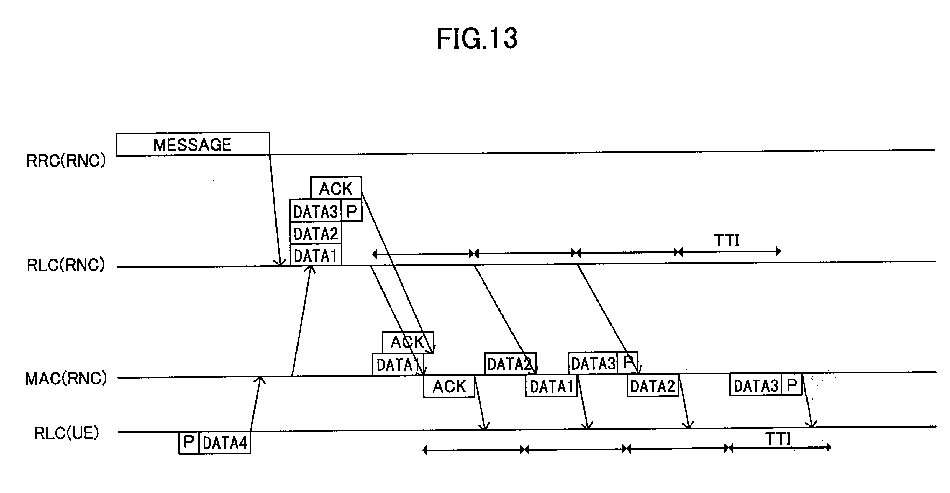

FIG. 13 is a timing chart illustrating another example of packet transmission according to this embodiment. FIG. 13 shows the transmission of a packet from an entity in the RLC layer to the subordinate MAC layer (and further to a user). First, when an entity (RLC) in the RLC layer of a radio network controller (RNC) receives message data addressed to a user (UE) from an upper layer (RRC), the entity (RLC) segments the message data into data packets 1, 2, and 3 each of appropriate data size. On the other hand, the user transmits a data packet 4 including a request for acknowledgment to the MAC layer through an entity (RLC) in the RLC layer (of the UE). The entity (RLC) in the RLC layer of the RNC receives data packet 4, and creates a control packet indicating the contents of a response (for instance, ACK).

The control packet (ACK) is provided with priority information indicating high priority, and the data packets 1 through 3 are provided with priority information indicating low priority. The data packets 1 through 3 are transmitted from the RNC layer to the MAC layer in accordance with the transmission rate TTI of the MAC layer. The control packet is transmitted immediately to the MAC layer regardless of the transmission rate of the MAC layer. The MAC layer determines the priorities of the packets stored in the buffer based on their priority information. Then, the MAC layer transmits the packets to the user at predetermined transmission time intervals (TTIs) based on their priorities. Thus, the control packet (ACK) can be transmitted immediately.

The above-described embodiments may also be employed as operations at the time of exchanging user data as data packets particularly between the RNC and the UE. That is, the above-described embodiments may be employed at the time of realizing the operation of giving priority to a predetermined control packet in a user data transmission and reception flow.

Thus, according to the present invention, the function of a communication device of transmitting a predetermined control packet prior to other packets in order to ensure transmission can be reinforced. As a result, waiting time before receiving a response to a transmitted request (RTT) can be reduced compared with the conventional configurations.

The present invention is not limited to the specifically disclosed embodiments, and variations and modifications may be made without departing from the scope of the present invention.

The present application is based on Japanese Priority Patent Application No. 2003-383700, filed on November, 13, 2003, the entire contents of which are hereby incorporated by reference.

## Claims

1. A communication device, comprising:
a priority provision part configured to provide priority information to a predetermined control packet to be transmitted from a first layer controlling a data packet retransmission function, and provide the predetermined control packet to a second layer lower than a first layer, the priority information indicating that the predetermined control packet is to be transmitted from the second layer prior to a packet other than the predetermined control packet.

2. The communication device as claimed in claim 1, wherein the priority information is included in an ATM header.

3. The communication device as claimed in claim 1, wherein the priority information is included in a channel identifier of an ATM cell.

4. The communication device as claimed in claim 1, wherein a control packet and a data packet are retained in a common buffer that operates in a first-in, first-out manner.

5. The communication device as claimed in claim 1, wherein the predetermined control packet is created in response to an acknowledgment request included in a packet received in the first layer.

6. The communication device as claimed in claim 5, wherein the predetermined control packet includes affirmative or negative acknowledgment.

7. The communication device as claimed in claim 5, wherein the predetermined control packet includes a reset request created in response to a protocol error.

8. A communication device, comprising:
a first retention part configured to retain a predetermined control packet; and
a second retention part configured to retain a packet other than the predetermined control packet,
wherein the first and second retention parts are provided separately in a first layer controlling a data packet retransmission function, and the predetermined control packet retained in the first retention part and the packet retained in the second retention part are transmitted separately to a second layer lower than the first layer.

9. The communication device as claimed in claim 8, wherein:
the predetermined control packet and the other packet are retained in separate buffers;
the other packet is extracted and transmitted to the second layer at a first transmission rate lower than or equal to a second transmission rate for packet transmission from the second layer; and
the predetermined control packet is transmitted to the second layer regardless of the first transmission rate.

10. The communication device as claimed in claim 8, wherein the predetermined control packet is created in response to an acknowledgment request included in a packet received in the first layer.

11. The communication device as claimed in claim 10, wherein the predetermined control packet includes affirmative or negative acknowledgment.

12. The communication device as claimed in claim 10, wherein the predetermined control packet includes a reset request created in response to a protocol error.

13. A communication device, comprising:
a retention unit configured to retain a predetermined control packet and a packet other than the predetermined control packet in a first layer controlling a data packet retransmission function; and
a transmission part configured to extract the predetermined control packet and the other packet retained in the retention unit and transmit the extracted packets to a second layer lower than the first layer at a first transmission rate lower than or equal to a second transmission rate for packet transmission from the second layer.

14. The communication device as claimed in claim 13, wherein:
the predetermined control packet and the other packet are retained in separate retention parts;
the separate retention parts are connected to a selector; and
the selector selects one of the packets retained in the retention parts at the first transmission rate.

15. The communication device as claimed in claim 13, wherein the predetermined control packet includes priority information indicating that the predetermined control packet is to be transmitted from the second layer prior to the other packet.

16. The communication device as claimed in claim 13, wherein the predetermined control packet is created in response to an acknowledgment request included in a packet received in the first layer.

17. The communication device as claimed in claim 16, wherein the predetermined control packet includes affirmative or negative acknowledgment.

18. The communication device as claimed in claim 16, wherein the predetermined control packet includes a reset request created in response to a protocol error.
